# EUROPEAN PATENT APPLICATION

(11) **EP 4 575 868 A1**
(43) Date of publication of application: **25.06.2025**
(21) Application number: 23220014.7
(22) Date of filing: 22.12.2023
(51) Int. Cl.: G06F 21/64, H04L 9/32, H04L 9/00, G06F 21/62

(54) **NON-TRANSITORY COMPUTER-READABLE MEDIUM PROVING TRANSACTION INFORMATION USING ZERO-KNOWLEDGE PROOF ALGORITHM, METHOD OF CONTENT TRANSACTION, AND BLOCKCHAIN SYSTEM THEREOF**

(71) Applicant: Zkrypto Inc, Seoul 04763 (KR)
(72) Inventor: OH, Hyun Ok, 05502 Songpa-gu (KR)
(74) Representative: Buzzi, Notaro & Antonielli d'Oulx S.p.A.

(57) **Abstract**

The present invention relates to a non-transitory computer-readable medium, a content transaction method, and a blockchain system, and specifically, may perform the steps of generating a public key, generating a primary transaction which registers the same in a blockchain network, encrypting and hashing digital content, generating a secondary transaction which registers the same in the blockchain network with content-related information, verifying the content-related information, generating a tertiary transaction which registers purchase requisition information received from an external terminal in the blockchain network, verifying the purchase requisition information in the blockchain network, generating a quaternary transaction which generates purchase approval information in the computer-readable medium and registers the same in the blockchain network, verifying the purchase approval information in the blockchain network, and transmitting a decryption key of the encrypted content to a buyer terminal in the blockchain network.

## Description

This work (Patent) was supported by Institute of Information & communications Technology Planning & Evaluation (IITP) grant funded by the Korea Government (MSIT) (No.2021-0-00532-003, Project Name : Blockchain Technology Development for IITP Data Economy, Task Name: Blockchain scalability solutions supporting high performance/capacity transactions, Contribution Rate: 100%).

### BACKGROUND

### Technical Field

The present invention relates to a non-transitory computer-readable medium proving transaction information, to a method of content transaction, and to a blockchain system, using a zero-knowledge proof algorithm.

### Background Art

A blockchain is a distributed database for recording digital transactions, and since the transaction details recorded in the blockchain are transparently disclosed, there is an advantage that the platform provider cannot hide or forge the transaction details.

However, privacy problems arise in content trading platforms using the blockchain. Content buyers cannot avoid disclosure due to the nature of the blockchain network, even if they want to hide sensitive information such as their transaction details and payment information. Content producers also have the same problem.

The world's largest Non-Fungible Token (NFT) exchange called OpenSea, which is equipped with blockchain technology, trades digital contents such as images, photos, music, and works of art in the form of an Non-Fungible Token (NFT). In OpenSea, reliability of the transaction platform is guaranteed by using the blockchain, but as described above, when the public blockchain is used, all transaction details such as the wallet address and selling price of the seller and the buyer are disclosed, resulting in a problem of exposing privacy.

Therefore, it is required to develop a technology capable of securing reliability through the blockchain technology while guaranteeing privacy of a buyer and a seller by applying an encryption technology without revealing such personal information or sensitive information.

### SUMMARY

### Technical Problem

An object of the present invention is to provide a non-transitory computer-readable medium proving transaction information, a method of content transaction, and a blockchain system, using a zero-knowledge proof algorithm.

### Technical Solution

According to an embodiment of the present disclosure, a non-transitory computer-readable medium including machine-readable instructions that, when executed by a processor of a computing device, when executed by a processor of a computing device, cause the computing device to perform a content transaction step of encrypting and transacting content. The content transaction step of encrypting and transacting content may cause the computing device to at least generate, by a seller terminal and a buyer terminal, a first transaction, the first transaction generates a private key and a public key and registers the private key and the public key in a blockchain network; encrypt and hash digital content provided from the seller terminal; generate, by the seller terminal, a second transaction, the second transaction registers content-related information in the blockchain network; prove the content-related information in the blockchain network; generate, by the computer-readable medium, a third transaction, the third transaction registers purchase requisition information received from an external terminal in the blockchain network; prove the purchase requisition information in the blockchain network; generate, by the computer-readable medium , a fourth transaction, the fourth transaction generates purchase approval information and registers the purchase approval information in the blockchain network; prove the purchase approval information in the blockchain network; and transmit a decryption key of an encrypted content to the buyer terminal in the blockchain network.

The content-related information may include a randomly generated private key, the encrypted content using a key data, a hash value of the encrypted content, a hash value of the key data, a seller terminal address, and a first zero-knowledge proof value.

The purchase requisition information may include a purchase requisition information contract value cmₚₑₑᵣ and a CT_{ord} obtained by encrypting order information with a seller's public key, wherein the order information comprises a buyer's public key, a random value required to make the cmₚₑₑᵣ, a purchase price, and a hash value of a content encryption key.

The purchase approval information may include a CT_{kdata} obtained by encrypting a data encryption key k_{data} using the buyer's public key and a third zero-knowledge proof value.

The generating of the second transaction may include generating a first zero-knowledge proof of the content-related information. The proving of the content-related information may include proving validity of a hash value of encrypted content and a hash value of key data by proving the first zero-knowledge proof.

The machine-readable instructions may further include registering the content-related information in the blockchain network when the first zero-knowledge proof is proved.

The generating of the third transaction may include generating a second zero-knowledge proof of the purchase requisition information. The proving of the purchase requisition information may include proving the second zero-knowledge proof.

The machine-readable instructions may further include temporarily storing a content purchase amount in the blockchain network when the second zero-knowledge proof is proved.

The generating of the fourth transaction may include generating a third zero-knowledge proof of the purchase approval information. The proving of the purchase approval information comprises proving the third zero-knowledge proof.

The machine-readable instructions may further include transmitting the temporarily stored content purchase amount to the seller terminal when the third zero-knowledge proof is proved.

The second, third and fourth transaction comprise steps to generate the first, second, and third zero-knowledge proofs, respectively. The generating the first, second, and third zero-knowledge proofs use a zk-snark algorithm.

The transmitting of the decryption key of the encrypted content may include decrypting a content decryption key encrypted at the buyer terminal to extract the content decryption key, and decrypting the encrypted content using the content decryption key.

Another exemplary embodiment of the present invention provides a method of content transaction using a zero-knowledge proof which is performed by a computing device including a processor. The method may include generating, by the computing device, a first transaction, the first transaction generates and registers a private key and a public key in a blockchain network; encrypting and hashing digital content provided from an outside; generating, by the computing device, a second transaction, the second transaction registers content-related information in the blockchain network; proving the content-related information through the blockchain network; generating a third transaction, the third transaction registers purchase requisition information received from an external terminal in the blockchain network; proving the purchase requisition information through the blockchain network; generating, by the computing device, a fourth transaction, the fourth transaction generates purchase approval information and registers the purchase approval information in the blockchain network; proving the purchase approval information through the blockchain network; and transmitting a decryption key of an encrypted content to a buyer terminal through the blockchain network.

In another general aspect, there is provided a blockchain system which may include a memory, and at least one processor connected to the memory. The at least one processor may include generating a first transaction, the first transaction generates a public key and registers the public key in a blockchain network; encrypting and hashing digital content provided from an outside; generating a second transaction, the second transaction registers content-related information in the blockchain network; proving the content-related information through the blockchain network; generating a third transaction, the third transaction registers purchase requisition information received from an external terminal in the blockchain network; proving the purchase requisition information through the blockchain network; generating a fourth transaction, the fourth transaction generates purchase approval information and registers the purchase approval information in the blockchain network; proving the purchase approval information through the blockchain network; and transmitting a decryption key of an encrypted content to a buyer terminal through the blockchain network.

### BRIEF DESCRIPTION OF THE DRAWINGS

FIG. 1 is a block diagram showing a blockchain system according to an example embodiment.
FIG. 2 is a diagram illustrating a method of content transaction according to an example embodiment.
FIGS. 3 to 9 are diagrams specifically illustrating each execution step of the content trading method according to FIG. 2.
FIG. 10 is a block diagram showing a blockchain system according to another embodiment of the present disclosure.
FIG. 11 is a diagram illustrating a content trading method according to another embodiment of the present invention.

### DETAILED DESCRIPTION

Hereinafter, exemplary embodiments of the present disclosure will be described in detail with reference to the accompanying drawings. Advantages and features of the present invention and methods of achieving the same will become apparent with reference to embodiments described in detail below together with the accompanying drawings. However, the technical spirit of the present invention is not limited to the following embodiments, but may be implemented in various different forms, and the following embodiments are provided to complete the technical spirit of the present invention and to completely inform a person having ordinary skill in the art to which the present invention belongs of the scope of the present invention, and the technical spirit of the present invention is only defined by the scope of the claims.

In adding reference numerals to elements in each drawing, it should be noted that the same elements will be designated by the same reference numerals, if possible, although they are shown in different drawings. In addition, in describing the present invention, when it is determined that a detailed description of related known features or functions may obscure the gist of the present invention, the detailed description thereof will be omitted.

Unless otherwise defined, all terms (including technical and scientific terms) used herein have the same meaning as commonly understood by one of ordinary skill in the art to which the inventive concept belongs. In addition, terms defined in commonly used dictionaries are not interpreted ideally or excessively unless they are clearly specifically defined. The terminology used herein is for the purpose of describing embodiments and is not intended to be limiting of the present invention. In the specification, a singular form includes a plural form unless specifically mentioned in the text.

In addition, in describing the feature element of the present invention, terms such as first, second, A, B, (a), (b), and the like may be used. The term is used only to distinguish the feature element from other feature elements, and the nature, sequence, or order of the corresponding feature element is not limited by the term. When a feature element is described as being "connected," "coupled," or "connected" to another element, the feature element may be directly connected or connected to the other element, but it should be understood that another feature element may be "connected," "coupled," or "connected" between each feature element.

It will be further understood that the terms "comprises" and/or "comprising" used in the present invention do not preclude the presence or addition of one or more other feature elements, steps, operations, and/or elements in the presence of stated feature elements, steps, operations, and/or elements.

A component included in any one embodiment and a feature element including a common function may be described using the same name in another embodiment. Unless otherwise stated, the description described in any one embodiment may be applied to other embodiments, and a detailed description may be omitted within a redundant range or a range that can be clearly understood by a skilled person in the art in the art.

Hereinafter, the present invention will be described in detail with reference to preferred embodiments of the present invention and the accompanying drawings.

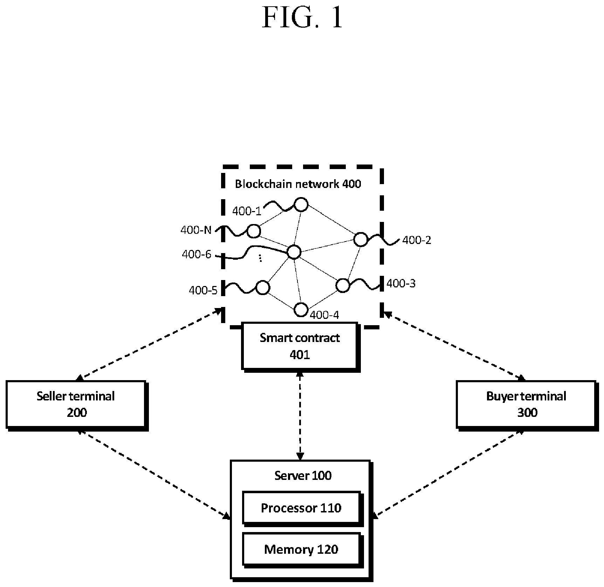

FIG. 1 is a block diagram showing a blockchain system according to an example embodiment. Referring to FIG. 1, the blockchain system may include a server 100, a seller terminal 200, a buyer terminal 300, and a blockchain network 400.

The server 100 may include a memory 120 and at least one processor 110 connected to the memory. The memory 120 may refer to an integral storage for storing and reading data, source code, programs, and data for performing the method of content transaction using the zero-knowledge proof according to the present invention.

The server 100 is any electronic device including hardware and software. For example, the server 100 may be an electronic device such as a router, a switch, a hub, a modem, a bridge, a repeater, a smartphone, a tablet, an IoT device, a PC computer, a server computer, a video game console, a camera, and the like, without being limited to a particular electronic device.

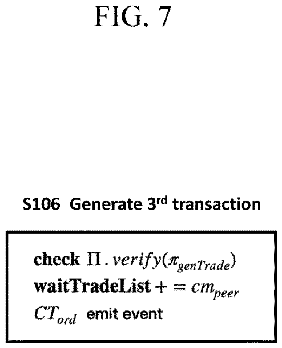

The memory 120 may store all data necessary for the operation of the server 100. For example, the memory 120 may be implemented as a DRAM, a mobile DRAM, an SRAM, a PRAM, an FRAM, an RRAM, and/or an MRAM. The memory 120 may include a solid state drive, a hard disk drive, a CD-ROM, etc. The memory 120 may store the method of content transaction using the zero-knowledge proof described above with reference to FIGS. 1 to 9, a blockchain system, a program related to a non-transitory computer-readable medium, application program data, system data, operating system data, and the like.

The processor 110 represents a hardware operation device capable of performing specific calculations or tasks. The processor 110 may be a microprocessor or a Central Processing Unit (CPU). The processor 110 may communicate with a memory and a display device via a bus such as an address bus, a control bus, or a data bus. According to an embodiment, the processor 110 may also be connected to an extended bus such as a Peripheral Component Interconnect (PCI) bus.

The seller terminal 200 and the buyer terminal 300 may be an integrated electronic device including hardware and software like the server 100, and are not limited to a particular example. The seller terminal 200 and the buyer terminal 300 may be configured with a processor, a memory, an input/output unit, a communication unit, a display unit, and the like, and may be controlled through the server 100 or may transmit/receive data for the transaction of digital content for maintaining privacy through the zero-knowledge proof proving through the blockchain network 400.

The blockchain network 400 includes a smart contract 401 issued to the blockchain network, and the blockchain network configures a distributed network by a plurality of nodes configured by a plurality of computing devices 400-1 ~ 400-N. The smart contract 401 may define an agreement obligation between two or more parties. The skilled person in the art may understand that a self-executing contract, a blockchain contract, or a digital contract is a type of the smart contract 401. The smart contract 401 includes computer code stored and replicated in the blockchain network 400 and supervised by the plurality of computing devices 400-1 ~ 400-N executing on the network. The issued blockchain refers to a digitized and distributed ledger. In some embodiments, the blockchain may operate on a public blockchain-based computing platform such as Ethereum, for example. In another embodiment, the blockchain may operate on a private blockchain-based computing platform. However, the technical idea according to the present specification is to maintain confidentiality of transaction-related information of transaction parties by using a method of content transaction to which a zero-knowledge proof algorithm is applied even in a public blockchain network 400. Therefore, the main embodiment will be described based on the public blockchain network.

The smart contract 401 may include, for example, code defining an operation to be performed by the server 100 in order for the seller terminal 200 and the buyer terminal 300 to generate a transaction in order to trade the transaction target content.

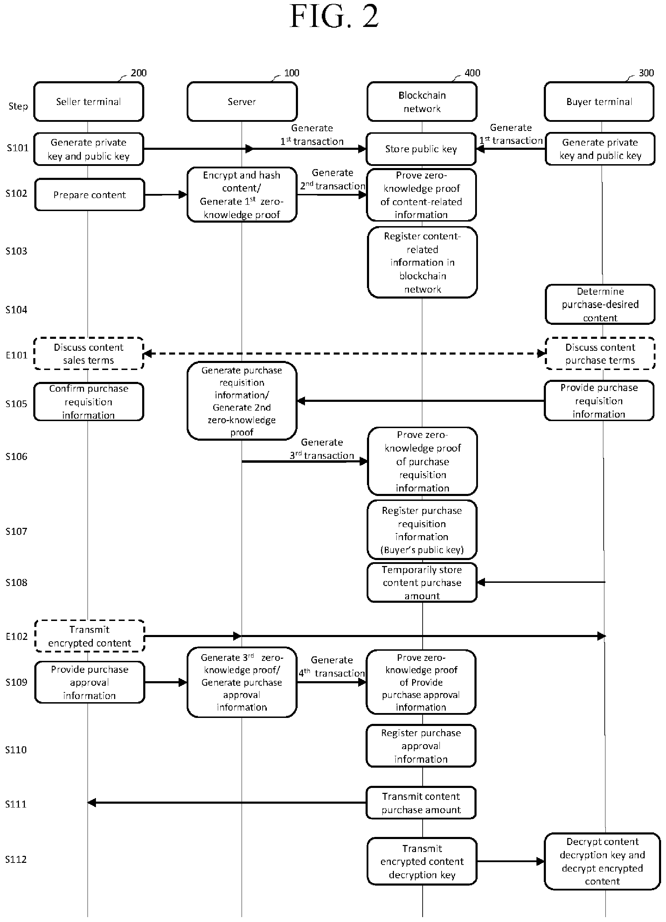

FIG. 2 is a diagram illustrating a method of content transaction according to an example embodiment. Referring to FIG. 2, a step in which the server 100 specifically implements a method of implementing a method of trading digital content using zero-knowledge proof proving between the seller terminal 200 and the buyer terminal 300 by using the blockchain network 400 is illustrated.

According to a first step S101, the seller terminal 200 generates a private key and a public key. The server 100 may generate a transaction for registering the seller's public key in the blockchain network. The buyer terminal 300 generates a private key and a public key for the buyer terminal.

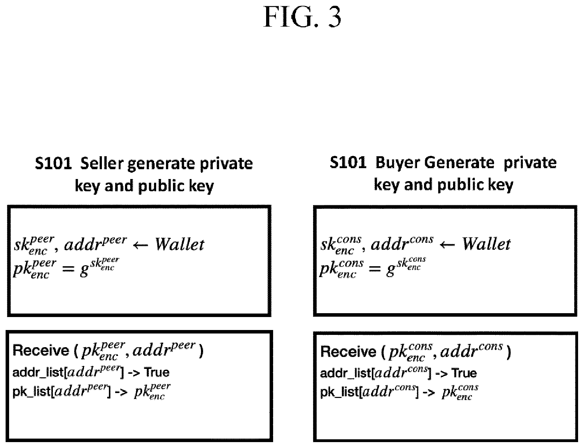

Referring to FIG. 3, the seller terminal 200 generates a public key pk_{enc}^{peer} and a private key sk_{enc}^{peer}, and stores the public key in the blockchain network as the public key pk_{enc}^{peer} and address addr^{peer}. The buyer terminal 300 generates a public key pk_{enc}^{cons} and a private key sk_{enc}^{cons}, and stores the public key in the blockchain network as the public key pk_{enc}^{cons} and address addr^{cons}.

According to a second step S102, the step of encrypting and hashing the digital content provided from the seller terminal 200 and the step of generating the second transaction for registering the content-related information in the blockchain network in the computer-readable medium are performed. The content-related information may be proved in the blockchain network. Specifically, the zero-knowledge proof included in the content-related information may be proved.

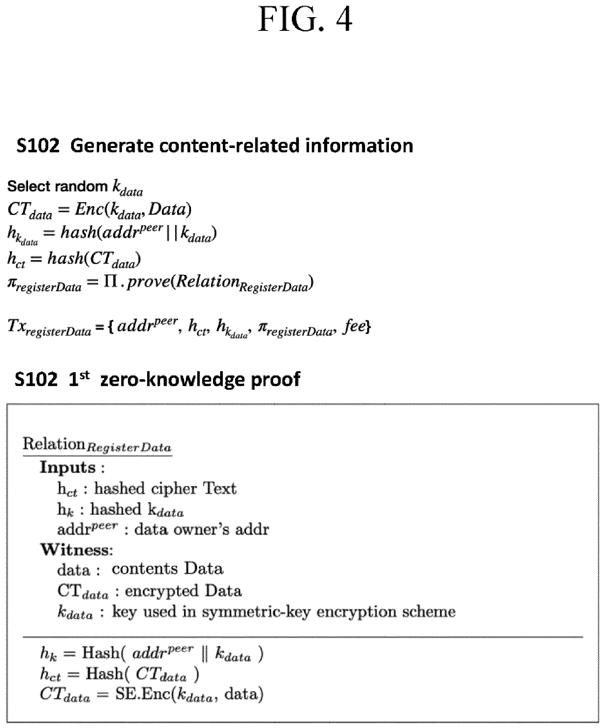

Here, the content-related information includes key data of the seller terminal, encrypted content using the key data, a hash value of the encrypted content, a hash value of the key data, a seller terminal address, and a first zero-knowledge proof value. Specifically, in the content-related information, as the content included in the transaction Tx, at least some of a wallet address of the seller, a hash value of a ciphertext of the content, a hash value of a key used to encrypt the content, a zero-knowledge proof for encryption and hash of the content (first zero-knowledge proof certification relation), and a price of the content may be registered in the blockchain network. In detail, referring to FIG. 4, k_{data} for encrypting content data is randomly determined and Data is encrypted to derive encrypted content data CT_{data}, and hash data h_{kdata} of k_{data} and a hash value h_{ct} of the encrypted content data are determined.

The digital content provided from the seller terminal 200 is processed by a hash in the same method as in FIG. 4, and then a first zero-knowledge proof is generated. The first zero-knowledge proof variable may consist of a public variable and a private variable. For example, the public variable (Input) may include a addr^{peer}, a hash value h_{ct} of the encrypted content, and a hash value for a content encryption key, and the private variable (Witness) may include content data, encrypted content, and a content encryption key.

The generating of the second transaction in which the server 100 registers the content-related information in the blockchain network may include generating a first zero-knowledge proof of the content-related information, and the proving of the content-related information in the blockchain network may include proving validity of a hash value of encrypted content and a hash value of key data by proving the first zero-knowledge proof. Alternatively, the seller terminal 200 may generate a second transaction that includes the role of the server 100 and registers content-related information in the blockchain network. The first zero-knowledge proof certification relation is described as Π.prove(Relation_{RegisterData}) = π_{Registerdata}.

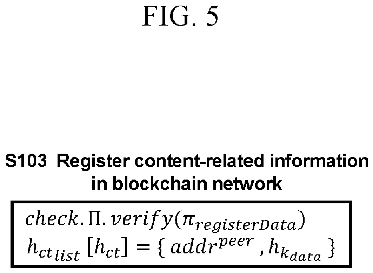

According to a third step S103, when the zero-knowledge proof of the content-related information is proved, the content-related information may be registered in the blockchain network. Referring to FIG. 5, a key-data data structure is stored in the blockchain network in the form of a key (a hash value of encrypted content data) - data (a seller terminal address, a hash value of content data).

According to a fourth step S 104, the purchase-desired content may be determined through the buyer terminal 300. The purchase-desired content may refer to content that the buyer terminal 300 desires to purchase among a plurality of contents registered in the blockchain network 400 by the plurality of seller terminals 200. The confirmation of the content is not necessarily performed through the server 100 or the blockchain network 400, and the content may be determined by any method and is not limited to a specific example.

According to a first external step E101, the buyer terminal 300 may confirm the content-related information prepared by the seller terminal 200 and registered in the blockchain network 400, and discuss and agree the content purchase terms with the seller terminal 200. This does not necessarily require the discussion to be transmitted/received through the server 100, and a mutual agreement may be made on the information required to generate the purchase requisition information by any method.

According to a fifth step S105, the buyer terminal 300 provides the server 100 with the purchase requisition information for the purchase terms of the content to be purchased, and the server 100 generates the purchase requisition information based on the provided information and generates the second zero-knowledge proof. Here, the purchase requisition information includes a purchase price, order information, a value obtained by encrypting the order information with a public key of a seller terminal, and a second zero-knowledge proof value. Alternatively, the buyer terminal 300 may directly generate the purchase requisition information to generate the second zero-knowledge proof.

According to a sixth step S106, a step of generating a third transaction for registering the purchase requisition information received from the external terminal in the blockchain network is performed. The generating of the third transaction includes generating a second zero-knowledge proof of the purchase requisition information, and the proving of the purchase requisition information in the blockchain network includes proving the second zero-knowledge proof. The present operation may be performed by the server 100 or may be directly performed by the buyer terminal 300.

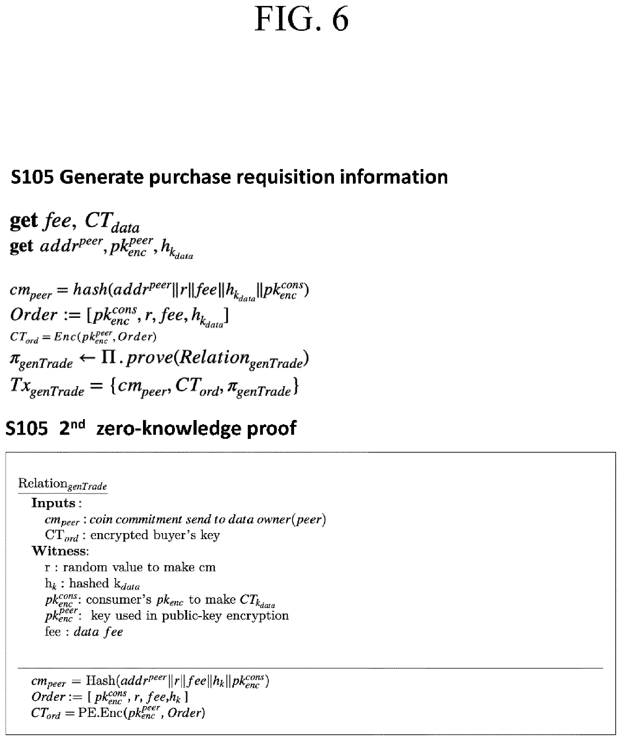

Referring to FIG. 6, the purchase requisition information indicates that the buyer terminal 300 determines content to be purchased, determines a price of a ciphertext CT_{data} of the content to be purchased by any method, and derives h_{ct} using a hash function H(CT_{data}). The addr^{peer} and h_{kdata} pairs may be found in the blockchain network 400 using the h_{ct} key. The purchase requisition information may include order information and purchase requisition information hash values. The server 100 or the buyer terminal 300 may generate the purchase requisition information contract value cmₚₑₑᵣ, generate the order information Order, and generate the CT_{ord} by encrypting the order information with the seller's public key pk_{enc}^{peer}. For example, the order information Order may include a buyer's public key, a random value required to create a cmₚₑₑᵣ, a purchase price, and a hash value of a content encryption key. The second zero-knowledge proof certificate relation is described as Π.prove(Relation_{genTrade}) = π.genTrade. The blockchain network 400 may prove the second zero-knowledge proof.

According to a seventh step S107, a step of registering the purchase requisition information in the blockchain network 400 when the second zero-knowledge proof is proved is illustrated. The third transaction proves the second zero-knowledge proof certificate relation generated in the previous step and includes the encrypted order information CT_{ord} and the purchase requisition information contract value cmₚₑₑᵣ for the content purchase amount as the temporary waiting list.

According to an eighth step S108, the content purchase amount according to the purchase requisition information (the purchase requisition information contract value cmₚₑₑᵣ for the content purchase amount) may be transmitted from the buyer terminal 300 to the blockchain network 400 and temporarily stored.

According to a second external step E102, after the content purchase amount is temporarily stored, the seller terminal 200 may transmit the encrypted content to the buyer terminal 300. Since the data processing cost is excessively generated when the content itself is stored in the blockchain network 400 when the amount of data is large, only the part related to the ledger is issued on the blockchain network 400 as a smart contract, and the content source may be traded in a state of being stored in an external storage. For example, the seller terminal 200 may transmit an access link for an external storage in which the encrypted content source is stored to the buyer terminal 300. However, the buyer terminal 300 does not have a key to decrypt the encrypted content. Therefore, after the content transmission is completed, the buyer terminal 300 receives decryption key encrypted with the buyer's public key. The content is extracted by decrypting the decryption key by the buyer's public key and decrypt the encrypted content by the decryption key. In the case of the seller terminal 200, since the content is transmitted after it is confirmed that the content purchase amount is deposited in the blockchain network 400, a safe transaction may be performed while privacy is maintained.

According to a ninth step S109, a step of generating a fourth transaction in which the seller terminal 200 provides purchase approval information to the server 100 and the server 100 generates purchase approval information and registers the generated purchase approval information in the blockchain network is performed. Alternatively, the seller terminal 200 may directly generate purchase approval information and generate a fourth transaction which registers the purchase approval information in the blockchain network. Here, the purchase approval information may include a CT_{kdata} and a third zero-knowledge proof value. The CT_{kdata} is created by encrypting the data encryption key k_{data} with the buyer's public key. The seller terminal may decrypt the CT_{ord} generated in the buyer terminal, and includes a value obtained by encrypting the key data of the seller terminal with the public key of the buyer, a value obtained by decrypting the encrypted order information, and a third zero-knowledge proof value.

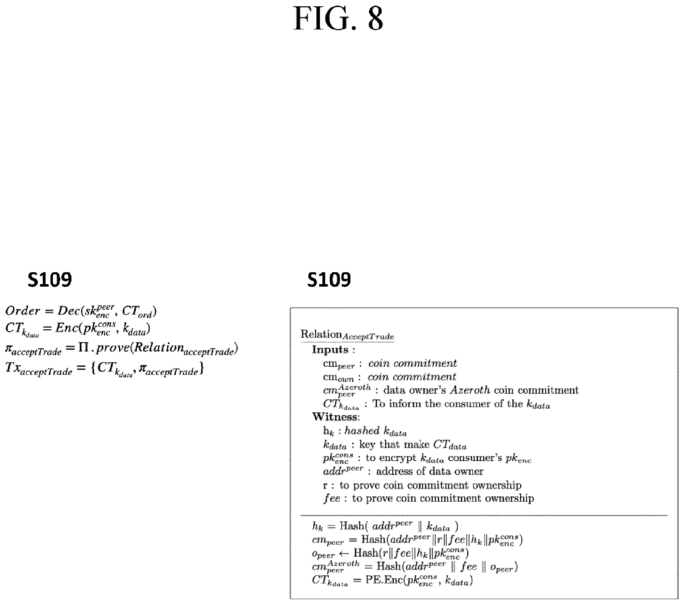

Referring to FIG. 8, the purchase approval information may derive order information by decrypting CT_{ord} encrypted with the seller's public key included in the third transaction into the seller's private key sk_{enc}^{peer}. Also, the purchase approval information may include a CT_{kdata} obtained by encrypting a data encryption key k_{data} using the buyer's public key.

According to a tenth step S110, when the third zero-knowledge proof is proved, the purchase approval information may be registered in the blockchain network 400. At this time, the cmₚₑₑᵣ in the temporary waiting list is deleted.

According to an eleventh step S111, the content purchase amount temporarily stored in the blockchain network 400 is transmitted to the seller terminal 200.

According to a twelfth step S112, the buyer terminal 300 may receive the encrypted content decryption key stored in the blockchain network 400, and the buyer terminal 300 may decrypt the encrypted content decryption key to extract the content decryption key, and decrypt the encrypted content based on the extracted content decryption key to extract the content.

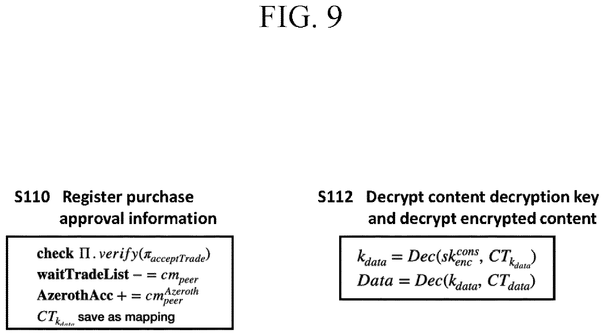

Referring to FIG. 9, k_{data}, which is a content encryption key, is decrypted and derived using a buyer's private key, and CT_{data}, which is content data encrypted using k_{data}, is decrypted to obtain data.

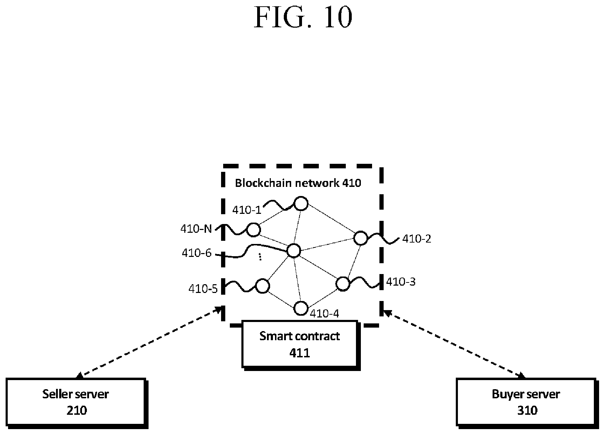

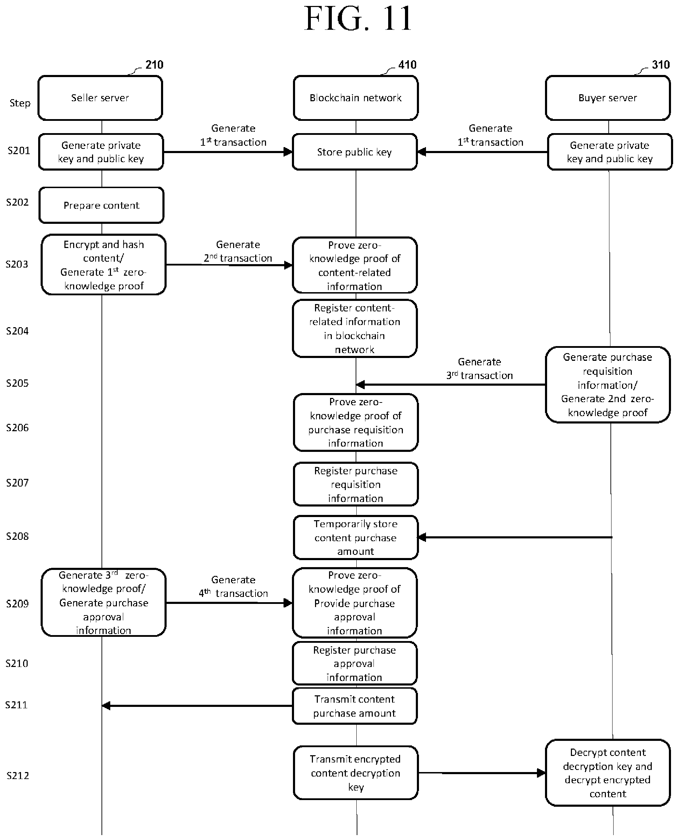

FIG. 10 is a block diagram showing a blockchain system according to another embodiment of the present disclosure. Referring to FIG. 10, the blockchain system includes a seller server 210, a buyer server 310, and a blockchain network 410. FIG. 11 is a diagram illustrating a method of content transaction according to another embodiment of the present invention. The blockchain network 410 includes a smart contract 411 issued to the blockchain network, and the blockchain network configures a distributed network by a plurality of nodes configured by a plurality of computing devices 410-1 ~ 410-N.

The seller server 210 and the buyer server 310 may include a memory and a processor as any electronic device including hardware and software, and details thereof are as described above with reference to FIGS. 1 and 2. Details of the blockchain network 410 are also as described above in the contents of FIGS. 1 and 2.

In the embodiment of FIGS. 10 and 11, each seller server 210 and the buyer server 310 directly generate each transaction, rather than the server 100 of FIG. 1 that performs intermediation.

Referring to FIG. 11, the seller server 210 generates a private key and a public key, and the buyer server 310 also generates a private key and a public key. According to a first step S201, the seller server 210 may issue and store the public key on the blockchain network 410 (the first transaction). The buyer server 310 may issue and store the public key on the blockchain network 410 (the first transaction). According to a second step S202, the seller server 210 may prepare the content, and according to a third step S203, the prepared content may be encrypted and hashed, and then the first zero-knowledge proof may be generated. According to step S203, a step of generating a second transaction for registering content-related information in the blockchain network in the seller server 210 is performed. The content-related information may be proved in the blockchain network. Specifically, the zero-knowledge proof included in the content-related information may be proved.

The content-related information includes key data of a seller server, encrypted content using the key data, a hash value of the encrypted content, a hash value of the key data, a seller server address, and a first zero-knowledge proof value. Specifically, in the content-related information, as the content included in the transaction Tx, at least some of a wallet address of the seller, a hash value of a ciphertext of the content, a hash value of a key used to encrypt the content, a zero-knowledge proof (first zero-knowledge proof certificate relation) for encryption and hash of the content, and a price of the content may be registered in the blockchain network. According to a fourth step S204, when the zero-knowledge proof of the content-related information is proved, the content-related information may be registered in the blockchain network.

According to a fifth step S205, the buyer server 310 may directly generate the purchase requisition information including the information on the content to be purchased, generate the second zero-knowledge proof, and then transfer the third transaction to the blockchain network 410.

According to a sixth step S206, the blockchain network 410 may prove Π.prove = π.genTrade, which is a second zero-knowledge proof certificate relation.

When the zero-knowledge proof is proved in the seventh step S207, the purchase requisition information may be registered in the blockchain network 410, and in the eighth step S208, the buyer server 310 may transmit the content price amount to the blockchain network 410 to store temporarily.

In the present invention, According to a ninth step S209, the seller server 210 may generate purchase approval information and a third zero-knowledge proof, and generate a fourth transaction which transferred to the blockchain network 410. Here, the purchase approval information may include a CT_{kdata} and a third zero-knowledge proof value. The CT_{kdata} is created by encrypting the data encryption key k_{data} with the buyer's public key. The seller terminal may decrypt the CT_{ord} generated in the buyer terminal, and includes a value obtained by encrypting the key data of the seller terminal with the public key of the buyer, a value obtained by decrypting the encrypted order information, and a third zero-knowledge proof value.

According to a tenth step S210, when the third zero-knowledge proof is proved, the purchase approval information may be registered in the blockchain network 410. At this time, the cmₚₑₑᵣ in the temporary waiting list is deleted.

According to an eleventh step S211, the content purchase amount temporarily stored in the blockchain network 410 is transmitted to the seller server 210.

According to a twelfth step S212, the buyer server 310 may receive an encrypted content decryption key stored in the blockchain network 410, and the buyer server 310 may decrypt the encrypted content decryption key to extract the content decryption key, and decrypt the encrypted content based on the extracted content decryption key to extract the content.

According to the technical idea of the present invention, a verifier may be made to prove that a public input/output and a private input satisfy a relational expression by using a zero-knowledge proof without revealing a private input.

According to the technical idea of the present invention, content transaction-related information may be verified using zk-SNARK as a zero-knowledge proof algorithm. Because zk-SNARK's proof size is small and the verifier's calculation is simple, it may be suitable for use in a blockchain network.

According to the technical idea of the present invention, it is possible to guarantee privacy of those who participate in a transaction and to transmit safe assets by encrypting a transaction and a transmission/reception account of a blockchain and proving the transaction through a zero-knowledge proof.

According to the technical idea of the present invention, it is possible to prove whether a seller has performed encryption and hash well by encrypting digital content provided through a seller terminal and then hashing the digital content to generate a first zero-knowledge proof, performing a transaction of registering the generated first zero-knowledge proof in a blockchain and then proving the zero-knowledge proof in a blockchain network.

According to the technical idea of the present invention, a transaction for registering purchase requisition information for content desired to be purchased through a buyer terminal may be transmitted to a blockchain network. The zero-knowledge proof of the purchase requisition information may be proved through the blockchain network to confirm the transaction and temporarily store the content purchase amount.

According to the technical idea of the present invention, the seller terminal may send a transaction for registering purchase approval information to a blockchain network. Through the blockchain network, the zero-knowledge proof of the purchase approval information may be proved to confirm the transaction and send the content purchase amount to the seller terminal.

Exemplary embodiments have been invented in the drawings and specification as described above. Although the embodiments are described using specific terms in the specification, they are used only for the purpose of describing the technical spirit of the present invention and are not used to limit the meaning or the scope of the present invention described in Claims. Therefore, those skilled in the art will understand that various modifications and other equivalent embodiments are possible therefrom. Therefore, the true technical protection scope of the present invention should be determined by the technical spirit of the appended claims.

## Claims

1. A non-transitory computer-readable medium, comprising machine-readable instructions that, when executed by a processor of a computing device, cause the computing device to perform a content transaction step of encrypting and transacting content, cause the computing device to at least:
generate, by a seller terminal and a buyer terminal, a first transaction, the first transaction generates a private key and a public key and registers the private key and the public key in a blockchain network;
encrypt and hash digital content provided from the seller terminal;
generate, by the seller terminal, a second transaction, the second transaction registers content-related information in the blockchain network;
prove the content-related information in the blockchain network;
generate, by the computer-readable medium, a third transaction, the third transaction registers purchase requisition information received from an external terminal in the blockchain network;
prove the purchase requisition information in the blockchain network;
generate, by the computer-readable medium, a fourth transaction, the fourth transaction generates purchase approval information and registers the purchase approval information in the blockchain network;
prove the purchase approval information in the blockchain network; and
transmit a decryption key of an encrypted content to the buyer terminal in the blockchain network.

2. The non-transitory computer-readable medium of claim 1,
wherein the content-related information comprises a randomly generated private key, the encrypted content using a key data, a hash value of the encrypted content, a hash value of the key data, a seller terminal address, and a first zero-knowledge proof value.

3. The non-transitory computer-readable medium according to claim 2,
wherein the purchase requisition information comprises a purchase requisition information contract value cmₚₑₑᵣ and a CT_{ord} obtained by encrypting order information with a seller's public key, wherein the order information comprises a buyer's public key, a random value required to make the cmₚₑₑᵣ, a purchase price, and a hash value of a content encryption key.

4. The non-transitory computer-readable medium of claim 3,
wherein the purchase approval information comprises a CT_{kdata} obtained by encrypting a data encryption key k_{data} using the buyer's public key and a third zero-knowledge proof value.

5. The non-transitory computer-readable medium of claim 1,
wherein the generating of the second transaction comprises generating a first zero-knowledge proof of the content-related information,
wherein the proving of the content-related information comprises proving validity of a hash value of encrypted content and a hash value of key data by proving the first zero-knowledge proof.

6. The non-transitory computer-readable medium of claim 5, the machine-readable instructions further comprising:
register the content-related information in the blockchain network when the first zero-knowledge proof is proved.

7. The non-transitory computer-readable medium of claim 1,
wherein the generating of the third transaction comprises generating a second zero-knowledge proof of the purchase requisition information,
wherein the proving of the purchase requisition information comprises proving the second zero-knowledge proof.

8. The non-transitory computer-readable medium of claim 7, the machine-readable instructions further comprising:
temporarily store a content purchase amount in the blockchain network when the second zero-knowledge proof is proved.

9. The non-transitory computer-readable medium of claim 1,
wherein the generating of the fourth transaction comprises generating a third zero-knowledge proof of the purchase approval information,
wherein the proving of the purchase approval information comprises proving the third zero-knowledge proof.

10. The non-transitory computer-readable medium of claim 9, the machine-readable instructions further comprising:
transmit a temporarily stored content purchase amount to the seller terminal when the third zero-knowledge proof is proved.

11. The non-transitory computer-readable medium of claim 1,
wherein the second, third and fourth transaction comprise steps to generate the first, second, and third zero-knowledge proofs, respectively,
wherein the generating the first, second, and third zero-knowledge proofs use a zk-snark algorithm.

12. The non-transitory computer-readable medium of claim 1,
wherein the transmitting of the decryption key of the encrypted content comprises:
decrypting a content decryption key encrypted at the buyer terminal to extract the content decryption key; and
decrypting the encrypted content using the content decryption key.

13. A method of content transaction using a zero-knowledge proof performed by a computing device including a processor, the method comprising:
generating, by the computing device, a first transaction, the first transaction generates and registers a private key and a public key in a blockchain network;
encrypting and hashing digital content provided from an outside;
generating, by the computing device, a second transaction, the second transaction registers content-related information in the blockchain network;
proving the content-related information through the blockchain network;
generating, by the computing device, a third transaction, the third transaction registers purchase requisition information received from an external terminal in the blockchain network;
proving the purchase requisition information through the blockchain network;
generating, by the computing device, a fourth transaction, the fourth transaction generates purchase approval information and registers the purchase approval information in the blockchain network;
proving the purchase approval information through the blockchain network; and
transmitting a decryption key of an encrypted content to a buyer terminal through the blockchain network.

14. A blockchain system comprising:
a memory; and
at least one processor connected to the memory,
wherein the at least one processor comprises:
generating a first transaction, the first transaction generates a public key and registers the public key in a blockchain network;
encrypting and hashing digital content provided from an outside;
generating a second transaction, the second transaction registers content-related information in the blockchain network;
proving the content-related information through the blockchain network;
generating a third transaction, the third transaction registers purchase requisition information received from an external terminal in the blockchain network;
proving the purchase requisition information through the blockchain network;
generating a fourth transaction, the fourth transaction generates purchase approval information and registers the purchase approval information in the blockchain network;
proving the purchase approval information through the blockchain network; and
transmitting a decryption key of an encrypted content to a buyer terminal through the blockchain network.
